**Europäisches Patentamt**

**European Patent Office**

**Office européen des brevets**

(19)

(11) Veröffentlichungsnummer: **0 192 841**
**B1**

(12) # EUROPÄISCHE PATENTSCHRIFT

(45) Veröffentlichungstag der Patentschrift:
**10.08.88**

(51) Int. Cl.⁴: **F 16 C 19/14**

(21) Anmeldenummer: **85115776.8**

(22) Anmeldetag: **11.12.85**

(54) Schrägkugellager und Verfahren zum Zusammenbau eines solchen Schrägkugellagers.

(30) Priorität: **31.01.85 DE 3503215**

(43) Veröffentlichungstag der Anmeldung:
**03.09.86 Patentblatt 86/36**

(45) Bekanntmachung des Hinweises auf die Patenterteilung:
**10.08.88 Patentblatt 88/32**

(84) Benannte Vertragsstaaten:
**DE FR GB IT SE**

(56) Entgegenhaltungen:
**DE-C-184 024**
**DE-C-212 879**
**DE-C-309 657**
**DE-C-443 594**
**FR-A-378 840**
**FR-A-420 895**
**FR-A-615 022**
**FR-A-1 029 486**

(73) Patentinhaber: **Schaeffler Wälzlager GmbH,**
**Schaeffler Ring Postfach 1553, D-6650**
**Homburg/Saar (DE)**

(72) Erfinder: **Hutzel, Bernhard, Dipl.- Ing. (FH),**
**Allenfeldstrasse 6, D-6680 Neunkirchen (DE)**

(74) Vertreter: **Klug, Horst, Dipl.- Ing. (FH), c/o INA**
**Wälzlager Schaeffler KG Postfach 12 20, D-8522**
**Herzogenaurach (DE)**

EP 0 192 841 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft ein Schrägkugellager, bestehend aus je einem inneren und einem äußeren Laufring, von denen jeder wenigstens eine Kugellaufrille enthält, in der ein Kranz von Kugeln abrollt, wobei wenigstens eine Kugellaufrille eines Laufringes auf ihrer einen Seite von einem hohen und auf der Gegenüberliegenden Seite von einem niedrigen Bord begrenzt ist.

Um die Handhabung derartiger Schrägkugellager beim Einbau zu erleichtern, ist es wünschenswert, daß diese nach dem Zusammenbau zu einer unlösbaren Baueinheit verbunden sind.

Bei einem bekannten Schrägkugellager dieser Art weist der niedrige Bord des äußeren Laufringes zu diesem Zweck einen Durchmesser auf, der geringfügig kleiner als der des äußeren Hüllkreises des Kranzes von Kugeln ist. Zum Zusammenbau wird der Kranz von Kugeln in die Kugellaufrille des inneren Laufringes eingelegt und dort mit Hilfe eines Käfigs oder eines anderen geeigneten Mittels fixiert. Dann wird der äußere Laufring durch Erwärmung so weit vergrößert, daß er axial mit dem niedrigen Bord über den im inneren Laufring befindlichen Kranz von Kugeln geschoben werden kann. Nach dem Erkalten ist der äußere Laufring über die Kugeln mit dem inneren Laufring zu einer unlösbaren Baueinheit verbunden.

Diese Art des Zusammenbaus ist jedoch dann unbefriedigend, wenn nachfolgend weitere Arbeitsgänge durchgeführt werden müssen, wie dies z. B. das Befetten des Lagers oder die Montage von Dichtringen sind. Hierzu muß erst abgewartet werden, bis das Lager wieder abgekühlt ist, was zu einer erheblichen Störung des Arbeitsablaufs führt.

Aus der DE-C-309 657 ist zwar ein Rillenkugellager bekannt, bei dem an beiden Laufringen ein Bord exzentrisch zur Achse abgedreht ist, wobei die tiefste Stelle zur Bildung einer Einfüllöffnung annähernd mit dem Grund der Kugellaufrille zusammenfällt, in die dann die Kugeln einzeln unter Druck eingefüllt werden.

Nachteilig ist dabei, daß die Kugeln einerseits schon beim Einfüllen durch die Belastung beschädigt werden können, andererseits laufen die Kugeln bei auftretender Axialbelastung an den sichelförmigen Übergängen in die Kugellaufrille an, was eine Zerstörung der Kugeln zur Folge hat.

Der Erfindung liegt die Aufgabe zugrunde, ein derartiges Schrägkugellager in einfacher Weise so auszubilden, daß es eine selbsthaltende Baueinheit bildet, und ein Verfahren zum Zusammenbau eines solchen Schrägkugellagers aufzuzeigen, bei dem sich ein Erwärmen des äußeren Laufringes erübrigt, so daß nachfolgende Arbeitsgänge ohne zeitliche Verzögerung durchgeführt werden können.

Erfindungsgemäß wird diese Aufgabe dadurch gelöst, daß an einem der Laufringe der niedrige Bord eine derart unrunde Kontur mit einer Anzahl höherer und tieferer Abschnitte aufweist, wobei die tieferen Abschnitte vorzugsweise absatzlos in die tiefste Stelle der Kugellaufrille einmünden, daß die Hüllkontur der höheren Abschnitte des Bordes der Hüllkontur der im anderen Laufring angeordneten Kugeln entspricht, wenn einer der Laufringe durch Druckeinwirkung elastisch unrund verformt ist, wobei

a) der Betrag, um den der eine Laufring unrund verformt ist, am Punkt der Druckeinwirkung höchstens der halben Radialluft des Schrägkugellagers entspricht,

b) der Betrag, um den die höheren Abschnitte des unrunden Bordes die tiefste Stelle der Kugellaufrille überragen, größer ist als die halbe Radialluft des Schrägkugellagers und höchstens der Summe aus der halben Radialluft des Schrägkugellagers und dem Betrag, um den der eine Laufring am Punkt der Druckeinwirkung unrund verformt ist, entspricht und

c) sich wenigstens ein höherer Abschnitt des unrunden Bordes in Umfangsrichtung über einen Winkel erstreckt, der größer ist, als der zwischen zwei benachbarten Kugeln eingeschlossene Winkel.

Unter Radialluft ist dabei das Maß zu verstehen, das sich ergibt, wenn die Mittelpunkte der Kugellaufrillen von Innenring und Außenring in einer Ebene liegen und die Ringe in dieser Lage radial von einer Endlage in die andere gegeneinander verschoben werden.

Zum Zusammenbau eines solchen Schrägkugellagers ist nach einer Ausführungsform des erfindungsgemäßen Verfahrens vorgesehen, daß die Kugeln in den anderen als den mit dem unrunden niedrigen Bord versehenen Laufring eingelegt werden, worauf einer der Laufringe durch Druckeinwirkung so weit elastisch unrund verformt wird, bis die Hüllkontur der Kugeln und die der höheren Abschnitte des unrunden niedrigen Bordes einander entsprechen, dann die Laufringe in ihrer Winkellage so zueinander ausgerichtet werden, daß sie axial ineinander einführbar sind, anschließend ineinander eingesetzt werden, worauf die Druckeinwirkung aufgehoben wird.

Nach einer anderen Ausführungsform des Verfahrens wird zum Zusammenbau eines derartigen zweireihigen Schrägkugellagers vorgeschlagen, daß in jeden Laufring ein Kranz von Kugeln in die Kugellaufrille mit den beidseitig hohen Borden eingelegt wird, worauf einer der Laufringe durch Druckeinwirkung so weit elastisch unrund verformt wird, bis die Hüllkontur der dem unrunden Bord zugewandten Kugeln und die der höheren Abschnitte des niedrigen unrunden Bordes einander entsprechen, dann die Laufringe in ihrer Winkellage so zueinander ausgerichtet werden, daß sie axial ineinander einführbar sind, anschließend ineinander eingesetzt werden, worauf die Druckeinwirkung aufgehoben wird.

Durch die erfindungsgemäße Ausbildung des niedrigen Bordes wird mit einfachen Mitteln ein zuverlässiger Zusammenhalt des Schrägkugellagers erreicht, da sich die höheren Abschnitte des unrunden niedrigen Bordes und die Kugeln radial überdecken, wenn die Druckelnwirkung aufgehoben wird. Besonders vorteilhaft wirkt es sich nach dem erfindungsgemäßen Verfahren zum Zusammenbau eines solchen Schrägkugellagers aus, daß ein Erwärmen des äußeren Laufringes in Fortfall kommt, so daß nachfolgende Arbeitsgänge unmittelbar nach dem Zusammenbau durchgeführt werden können.

Im einfachsten Fall ist es denkbar, daß der unrunde niedrige Bord nur einen höheren Abschnitt aufweist, wenn dieser in Umfangsrichtung größer ist, als der zwischen zwei benachbarten Kugeln eingeschlossene Winkel. Es ist auch nicht unbedingt erforderlich, daß die Kontur des unrunden niedrigen Bordes mit der Hüllkontur der in die Kugellaufrille des anderen Laufringes eingelegten Kugeln identisch ist, solange durch Druckelnwirkung an zwei oder mehreren Stellen des einen Laufringes dafür gesorgt ist, daß die Hüllkontur der höheren Abschnitte des unrunden Bordes der Hüllkontur der Kugeln soweit entspricht, daß die Laufringe axial ineinander einsetzbar sind. Das erfindungsgemäße Schrägkugellager kann vollkugelig ausgebildet oder mit einem Käfig versehen sein. Es ist auch möglich, daß das Schrägkugellager mehr als zwei Kränze von Kugeln aufweist.

Nach einer Ausführungsform der Erfindung ist vorgesehen, daß der niedrige Bord mit der unrunden Kontur am inneren Laufring angeordnet ist. Nach einer anderen Ausführungsform der Erfindung ist es aber auch möglich, daß der niedrige Bord mit der unrunden Kontur am äußeren Laufring angeordnet ist.

In beiden Fällen kann der Zusammenbau des Schrägkugellagers dadurch bewerkstelligt werden, daß der den unrunden niedrigen Bord aufweisende Laufring unverformt bleibt, während der die Kugeln in seiner Kugellaufrille aufweisende andere Laufring derart unrund verformt wird, daß die Hüllkontur der Kugeln der Hüllkontur der höheren Abschnitte des unrunden niedrigen Bordes entspricht. Es kann aber auch derart verfahren werden, daß der Laufring mit dem unrunden niedrigen Bord derart unrund verformt wird, daß die Hüllkontur der höheren Abschnitte des unrunden niedrigen Bordes der Hüllkontur der in dem anderen unverformten Laufring angeordneten Kugeln entsprechend kreisförmig ist.

Eine besonders vorteilhafte Ausgestaltung der Erfindung sieht vor, daß die unrunde Kontur des niedrigen Bordes annähernd die Form einer Ellipse aufweist. Eine solche Kontur ist in besonders einfacher Weise herstellbar und erfordert auch beim Zusammenbau des Lagers nur einen geringen Aufwand, da die Druckeinwirkung auf den zu verformenden Laufring an zwei Stellen ausreichend ist.

Nach einer weiteren Ausführungsform der Erfindung wird vorgeschlagen, daß das Schrägkugellager zwei Kränze von Kugeln aufweist, wobei der Laufring mit den unrunden niedrigen Borden zwischen den Kränzen von Kugeln in einer quer zur Achse verlaufenden Ebene geteilt ist. Dadurch ergibt sich der Vorteil, daß sowohl zweireihige Schrägkugelllager in X- als auch in O-Ausführung nach dem vorgeschlagenen Verfahren zusammengebaut werden können.

Nach einer Weiterbildung der Erfindung ist vorgesehen, daß das Schräg kugellager zwei Kränze von Kugeln zur Aufnahme von Radial und einseitigen Axialkräften aufweist, die in einteiligen Laufringen aufgenommen sind, wobei wenigstens die inneren Hüllkreise der Kränze von Kugeln unterschiedlich sind und wobei wenigstens eine Kugellaufrille des äußeren Laufringes beidseitig von hohen Borden begrenzt ist, während die Kugellaufrillen des inneren Laufringes nur an den der Axialkraft ausgesetzten Seiten hohe Borde aufweisen und der unrunde niedrige Bord am inneren Laufring vorgesehen ist.

Letztlich ist im Rahmen der Erfindung vorgesehen, daß das Schrägkugel lager zwei Kränze von Kugeln zur Aufnahme von Radial und einseitigen Axialkräften aufweist, die auf einem gemeinsamen Teilkreisdurchmesser in einteiligen Laufringen aufgenommen sind, wobei die eine Kugellaufrille im äußeren Laufring und die andere Kugellaufrille im inneren Laufring an den der Axialkraft abgewandten äußeren Enden der Laufringe je einen niedrigen und an ihren gegenüberliegenden Seiten je einen hohen Bord aufweisen, während die übrigen Kugellaufrillen beidseitig von hohen Borden begrenzt sind. Die vorgeschlagene Ausbildung der Laufringe ermöglicht es, auch zweireihige Schrägkugellager mit ungeteilten Laufringen in einfacher Weise zu einer unlösbaren Baueinheit zu verbinden, wenn einer dieser Laufringe einen unrunden niedrigen Bord aufweist.

Ausführungsbeispiele der Erfindung sind in den Zeichnungen dargestellt und werden nachfolgend näher beschrieben. Es zeigen:

Fig. 1 ein erfindungsgemäßes Schrägkugellager im Schnitt nach der Linie I-I in Figur 2,

Fig. 2 eine Stirnansicht des Lagers nach Figur 1,

Fig. 3 eine Stirnansicht des Lagers nach den Figuren 1 und 2 mit unrund verformtem Außenring,

Fig. 4 einen Schnitt nach der Linie IV-IV in Figur 3,

Fig. 5 einen Längsschnitt durch ein Schrägkugellager mit übertrieben dargestellter Radialluft,

Fig. 6 ein zweireihiges Schrägkugellager im Schnitt nach der Linie VI-VI in Figur 7,

Fig. 7 einen Schnitt nach der Linie VII-VII in Figur 6,

Fig. 8 eine Stirnansicht des Lagers den nach Figuren 6 und 7 mit unrund verformtem Außenring,

Fig. 9 einen Schnitt nach der Linie IX-IX in Figur 8,

Fig. 10 einen Längsschnitt durch ein zweireihiges Schrägkugellager mit einteiligen Laufringen,

Fig. 11 einen Schnitt entsprechend der Darstellung in Figur 4,

Fig. 12 einen Längsschnitt durch eine andere Ausführungsform eines zweireihigen Schrägkugellagers und

Fig. 13 einen Schnitt entsprechend der Darstellung in Figur 4.

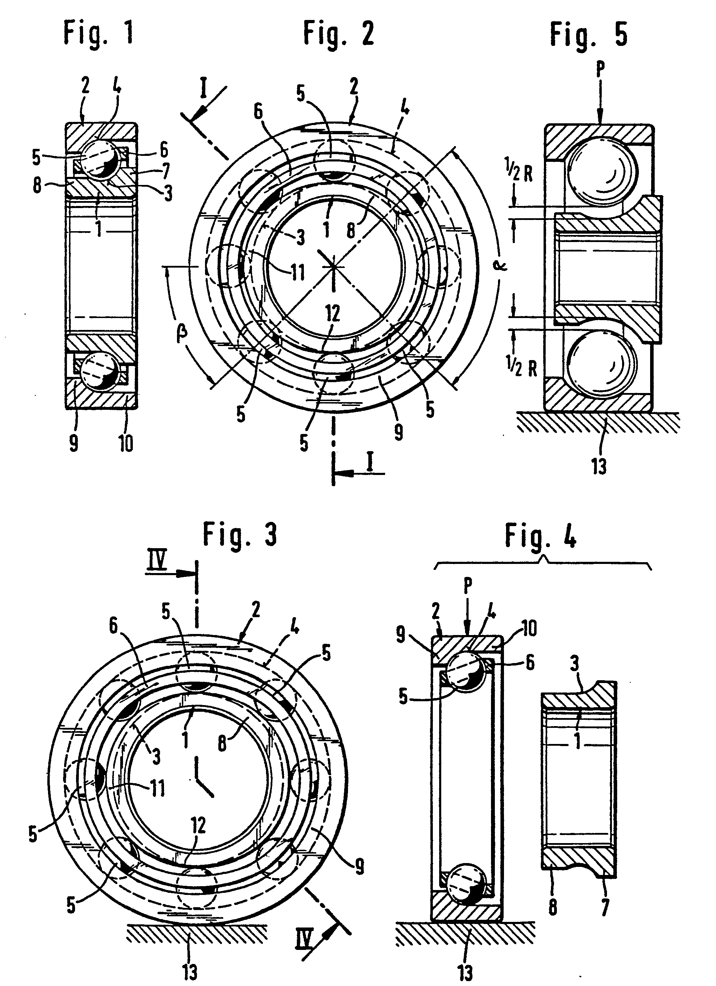

Gemäß den Figuren 1 bis 4 besteht das Schrägkugellager aus dem inneren Laufring 1 und dem äußeren Laufring 2, von denen jeder eine Kugellaufrille 3 bzw. 4 enthält, in denen ein Kranz von Kugeln 5 abrollt, die in einem Käfig 6 auf Abstand gehalten sind. Die Kugellaufrille 3 des inneren Laufrings 1 ist auf einer Seite von einem hohen Bord 7 und auf der gegenüberliegenden Seite von einem niedrigen Bord 8 begrenzt, während die Kugellaufrille 4 des äußeren Laufrings 2 auf einer Seite von einem hohen Bord 9 und auf der gegenüberliegenden Seite von einem niedrigen Bord 10 begrenzt ist.

Am inneren Laufring 1 ist der niedrige Bord 8 mit einer unrunden Kontur in Form einer Ellipse versehen, die höhere Abschnitte 11 und tiefere Abschnitte 12 aufweist, wobei letztere absatzlos in die tiefste Stelle der Kugellaufrille 3 einmünden und wobei der Betrag, um den die höheren Abschnitte 11 des unrunden Bordes 8 die tiefste Stelle der Kugellaufrille 3 überragen, größer ist als die halbe Radialluft des Schrägkugellagers und höchstens der Summe aus der halben Radialluft des Schrägkugellagers und dem Betrag, um den der Laufring 2 am Punkt der Druckeinwirkung bei der Montage unrund verformt ist, entspricht. Die unrunde Kontur des Bordes 8 ist dabei in den Zeichnungen stark übertrieben dargestellt, während die Radialluft vernachlässigt ist.

Wie Figur 2 zeigt, erstrecken sich die höheren Abschnitte 11 über einen Winkel α, der in Umfangsrichtung größer ist, als der zwischen zwei benachbarten Kugeln 5 eingeschlossene Winkel β. Durch diese Ausbildung überdecken die höheren Abschnitte 11 des Bordes 8 beim gezeigten Ausführungsbeispiel jeweils drei Kugeln 5 radial so weit, daß das Schrägkugellager zu einer selbsthaltenden Baueinheit verbunden ist.

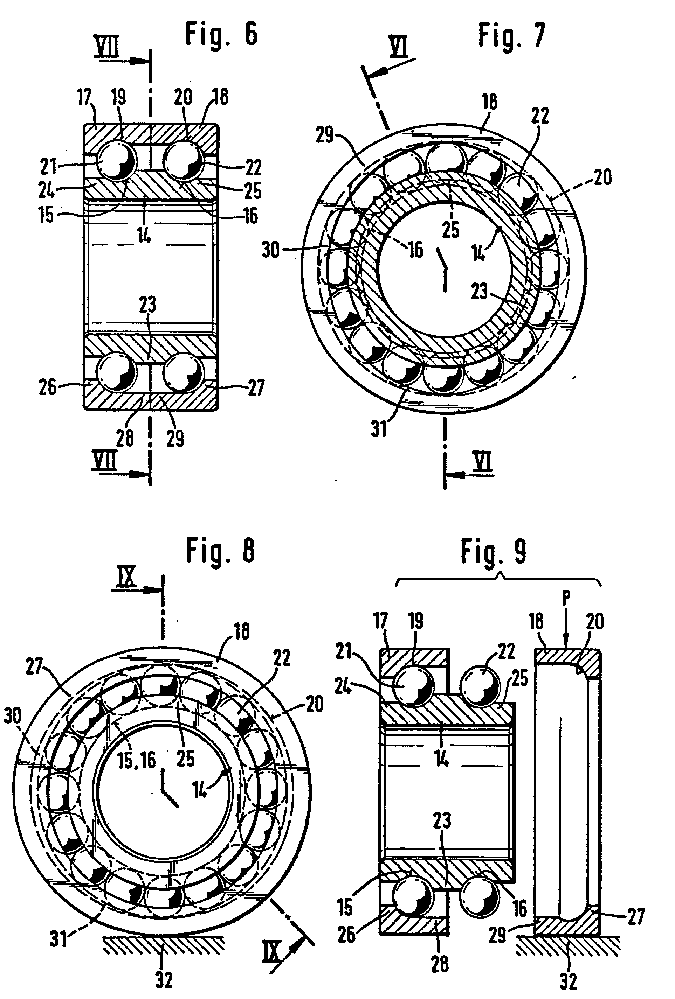

Zum Zusammenbau des Schrägkugellagers werden entsprechend Figur 4 die in dem Käfig 6 auf Abstand gehaltenen Kugeln 5 in die Kugellaufrille 4 des äußeren Laufringes 2 eingelegt, worauf der äußere Laufring 2, der auf einer angedeuteten Unterlage 13 abgestützt ist, durch Druckeinwirkung in Richtung des Pfeiles P so weit elastisch unrund verformt wird, bis die Hüllkontur der Kugeln 5 und die der höheren Abschnitte 11 des niedrigen Bordes 8 einander entsprechen. Der Betrag, um den der Laufring 2 dabei unrund verformt wird, darf wie in Figur 5 angedeutet, am Punkt der Druckeinwirkung höchstens der halben Radialluft des Schrägkugellagers entsprechen. Dann werden die Laufringe 1 und 2, wie dies in Figur 3 gezeigt ist, in ihrer Winkellage so zueinander ausgerichtet, daß sie axial ineinander einführbar sind. Anschließend wird der innere Laufring 1 axial in den mit den Kugeln 5 versehenen, unrund verformten äußeren Laufring 2 eingesetzt, worauf die Druckeinwirkung aufgehoben wird und die Laufringe 1 und 2 die in Figur 2 dargestellte Lage einnehmen.

Die Figuren 6 bis 9 zeigen ein zweireihiges Schrägkugellager, das aus dem inneren Laufring 14 mit den Kugellaufrillen 15 und 16 und den beiden äußeren Laufringhälften 17 und 18 besteht, von denen jede eine Kugellaufrille 19 bzw. 20 enthält, in denen zwei Kränze von Kugeln 21 bzw. 22 abrollen. Der innere Laufring 14 weist zwischen den Kränzen von Kugeln 21 bzw. 22 einen Bord 23 und an seinen äußeren Enden Borde 24 und 25 auf, deren Konturen, wie Figur 8 zeigt, kreisförmig sind.

Die äußeren Laufringhälften 17 und 18 weisen an ihren äußeren Enden einen hohen Bord 26 bzw. 27 auf, während zwischen den Kränzen von Kugeln 21 und 22 der niedrige Bord 28 bzw. 29 angeordnet ist. Wie Figur 7 zeigt, weisen die niedrigen Borde 28 und 29 der äußeren Laufringhälften 17 und 18 die unrunde Kontur in Form einer Ellipse auf, die höhere Abschnitte 30 und tiefere Abschnitte 31 besitzt. Der Zusammenhalt des Lagers wird auch hier durch die radiale Überdeckung zwischen den höheren Abschnitten 30 und den Kugeln 21 bzw. 22 erzielt.

Eine Abwandlung des vorstehend beschriebenen Verfahrens zum Zusammenbau wird anhand der Figuren 7 bis 9 beschrieben, wobei in letzterer bereits die eine äußere Laufringhälfte 17 montiert ist. Der Kranz von Kugeln 22 wird in die Kugellaufrille 16 eingelegt und dort z. B. in bekannter Weise mit Fett am Laufring 14 festgehalten. Wie die Figuren 7 und 8 zeigen, weist der Bord 25 des inneren Laufringes 14 eine kreisförmige Kontur auf. Dafür ist an der äußeren Laufringhälfte 18 der niedrige Bord 29 mit einer unrunden Kontur in Form einer Ellipse versehen, die höhere Abschnitte 30 und tiefere Abschnitte 31 besitzt. Die Laufringhälfte 18 wird nunmehr, wie in Figur 9 gezeigt, auf einer angedeuteten Unterlage 32 abgestützt und durch Druckeinwirkung in Richtung des Pfeiles P so weit unrund verformt, bis die unrunde Kontur des niedrigen Bordes 29 eine kreisförmige Gestalt annimmt und mit der Hüllkontur des Kranzes von Kugeln 22 übereinstimmt, wie dies Figur 8 zeigt. Auch dabei entspricht der Betrag, um den die Laufringhälfte 10 verformt wird, am Punkt der Druckeinwirkung höchstens der halben Radialluft des Schrägkugellagers. Der weitere Zusammenbau erfolgt dann in der vorher beschriebenen Weise.

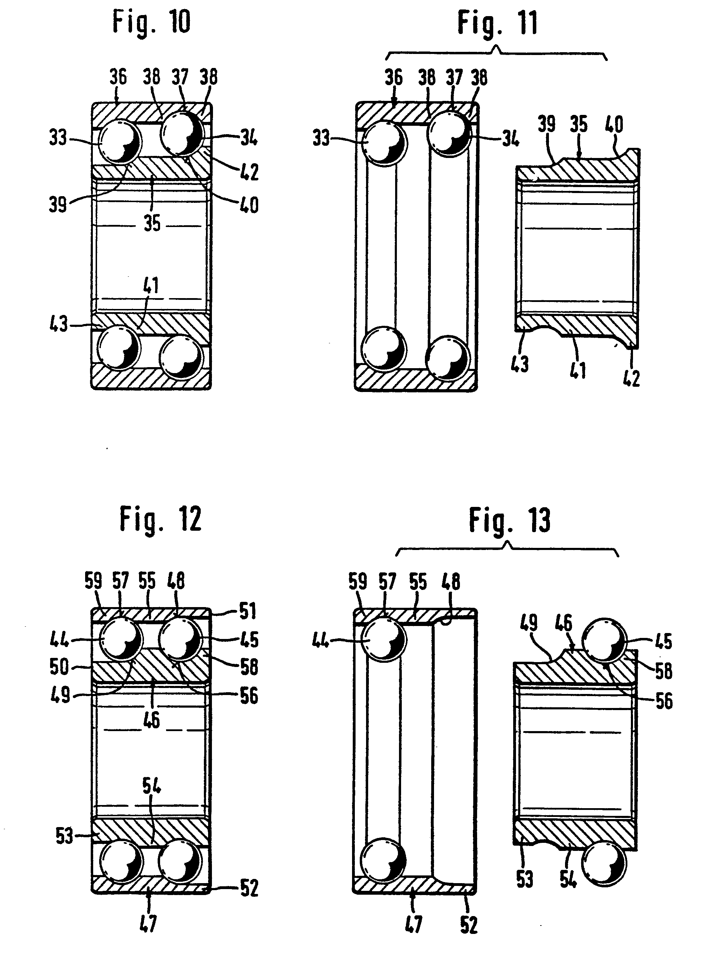

In den Figuren 10 und 11 ist ein Schrägkugellager dargestellt, das zwei Kränze von Kugeln 33 und 34 aufweist, die in einteiligen Laufringen 35 bzw. 36 aufgenommen sind, wobei die inneren Hüllkreise der Kugeln 33 und 34 unterschiedlich sind. Dabei ist die Kugellaufrille 37 des Laufringes 36 beidseitig von hohen Borden 38 begrenzt, während die Kugellaufrillen 39 und 40 des inneren Laufringes 35 nur an den der Axialkraft ausgesetzten Seiten hohe Borde 41 bzw. 42 aufweisen. Der unrunde niedrige Bord 43 ist am inneren Laufring 35 vorgesehen.

Wie Figur 11 zeigt, werden zum Zusammenbau des Schrägkugellagers entsprechend dem in Figur 4 beschriebenen Verfahren die Kränze von Kugeln 33 und 34 in den äußeren Laufring 36 eingelegt, der dann in der vorbeschriebenen Weise so weit unrund verformt wird, bis der innere Laufring 35 axial in den äußeren Laufring 36 einführbar ist.

Das Schrägkugellager nach den Figuren 12 und 13 weist zwei Kränze von Kugeln 44 und 45 auf, die auf einem gemeinsamen Teilkreisdurchmesser in einteiligen Laufringen 46 bzw. 47 aufgenommen sind, wobei die eine Kugellaufrille 48 im äußeren Laufring 47 und die andere Kugellaufrille 49 im inneren Laufring 46 an den der Axialkraft abgewandten äußeren Enden 50 bzw. 51 der Laufringe 46 und 47 je einen niedrigen Bord 52 bzw. 53 aufweist, während an ihren gegenüberliegenden Seiten je ein hoher Bord 54 bzw. 55 vorgesehen ist. Die übrigen Kugellaufrillen 56 und 57 dagegen werden beidseitig von hohen Borden 58 und 59 begrenzt. Auch bei diesem Ausführungsbeispiel ist der niedrige Bord 53 am inneren Laufring 46 unrund ausgebildet.

Zum Zusammenbau des Schrägkugellagers wird wie Figur 13 zeigt, ein Kranz von Kugeln 44 in die Kugellaufrille 57 des äußeren Laufringes 47, die beidseitig von hohen Borden 59 begrenzt ist und ein Kranz von Kugeln 45 in die Kugellaufrille 56 des inneren Laufringes 46, die ebenfalls beidseitig von hohen Borden 58 begrenzt ist, eingelegt, worauf der Laufring 47 in der geschilderten Weise so weit unrund verformt wird, bis die Hüllkontur der dem unrunden Bord 53 zugewandten Kugeln 44 und die höheren Abschnitte des niedrigen unrunden Bordes 53 in analoger Weise einander entsprechen. Für den weiteren Zusammenbau gelten die vorstehend beschriebenen Verfahrensschritte.

**Patentansprüche**

1. Schrägkugellager, bestehend aus je einem inneren und einem äußeren Laufring (1, 2, 14, 17, 18, 35, 36, 46), von denen jeder wenigstens eine Kugellaufrille (3, 4, 15, 16, 19, 20, 39, 49) enthält, in der ein Kranz von Kugeln (5, 21, 22, 33, 44) abrollt, wobei wenigstens eine Kugellaufrille (3, 4, 15, 16, 19, 20, 39, 49) eines Laufringes (1, 2, 14, 17, 18, 35, 36, 46) auf ihrer einen Seite von einem hohen und auf der gegenüberliegenden Seite von einem niedrigen Bord begrenzt ist, dadurch gekennzeichnet, daß an einem der Laufringe (1, 2, 14, 17, 18, 35, 46) der niedrige Bord (8, 10, 24, 25, 28, 29, 43, 53) eine derart unrunde Kontur mit einer Anzahl höherer und tieferer Abschnitte (11, 12, 30, 31) aufweist, wobei die tieferen Abschnitte (12, 31) vorzugsweise absatzlos in die tiefste Stelle der Kugellaufrille (3, 4, 15, 16, 19, 20, 39, 49) einmünden, daß die Hüllkontur der höheren Abschnitte (11, 30) des Bordes (8, 10, 24, 25, 28, 29, 43, 53) der Hüllkontur der im anderen Laufring (1, 2, 14, 17, 18, 36, 47) angeordneten Kugeln (5, 21, 22, 33, 44) entspricht, wenn einer der Laufringe (1, 2, 14, 17, 18, 36, 47) durch Druckeinwirkung elastisch unrund verformt ist, wobei

a) der Betrag, um den der eine Laufring (1, 2, 14, 17, 18, 36, 47) unrund verformt ist, am Punkt der Druckeinwirkung höchstens der halben Radialluft des Schrägkugellagers entspricht,

b) der Betrag, um den die höheren Abschnitte (11, 30) des unrunden Bordes (8, 10, 24, 25, 28, 29, 43, 53) die tiefste Stelle der Kugellaufrille (3, 4, 15, 16, 19, 20, 39, 49) überragen, größer ist als die halbe Radialluft des Schrägkugellagers und höchstens der Summe aus der halben Radialluft des Schrägkugellagers und dem Betrag, um den der eine Laufring (1, 2, 14, 17, 18, 36, 47) am Punkt der Druckeinwirkung unrund verformt ist, entspricht und

c) sich wenigstens ein höherer Abschnitt (11, 30) des unrunden Bordes (8, 10, 24, 25, 28, 29, 43, 53) in Umfangsrichtung über einen Winkel erstreckt, der größer ist, als der zwischen zwei benachbarten Kugeln (5, 21, 22, 33, 44) eingeschlossene Winkel.

2. Schrägkugellager nach Anspruch 1, dadurch gekennzeichnet, daß der niedrige Bord (8, 24, 25, 43, 53) mit der unrunden Kontur am inneren Laufring (1, 14, 35, 46) angeordnet ist.

3. Schrägkugellager nach Anspruch 1, dadurch gekennzeichnet, daß der niedrige Bord (10, 28, 29) mit der unrunden Kontur am äußeren Laufring (2, 17, 18) angeordnet ist.

4. Schrägkugellager nach Anspruch 1, 2 oder 3, dadurch gekennzeichnet, daß die unrunde Kontur des niedrigen Bordes (8, 10, 28, 29, 43, 53) annähernd die Form einer Ellipse aufweist.

5. Schrägkugellager nach Anspruch 1, 2, 3 oder 4, dadurch gekennzeichnet, daß es zwei Kränze von Kugeln (21, 22) aufweist, wobei der Laufring (17, 18) mit den niedrigen Borden (28, 29) zwischen den Kränzen von Kugeln (21, 22) in einer quer zu Achse verlaufenden Ebene geteilt ist.

6. Schrägkugellager nach Anspruch 1 oder 4, dadurch gekennzeichnet, daß es zwei Kränze von Kugeln (33, 34) zur Aufnahme von Radial- und einseitigen Axialkräften aufweist, die in einteiligen Laufringen (35, 36) aufgenommen sind, wobei wenigstens die inneren Hüllkreise der Kränze von Kugeln (33, 34) unterschiedlich sind und wobei wenigstens eine Kugellaufrille (37) des äußeren Laufringes (36) beidseitig von hohen Borden (38) begrenzt ist, während die Kugellaufrillen (39, 40) des inneren Laufringes (15) nur an den der Axialkraft ausgesetzten Seiten hohe Borde (41, 42) aufweisen und der unrunde niedrige Bord (43) am inneren Laufring (35) vorgesehen ist.

7. Schrägkugellager nach Anspruch 1, 2, 3 oder 4, dadurch gekennzeichnet, daß es zwei Kränze von Kugeln (44, 45) zur Aufnahme von Radial- und einseitigen Axialkräften aufweist, die auf einem gemeinsamen Teilkreisdurchmesser in einteiligen Laufringen (46, 47) aufgenommen sind, wobei die eine Kugellaufrille (48) im äußeren Laufring (47) und die andere Kugellaufrille (49) im inneren Laufring (46) an den der Axialkraft abgewandten äußeren Enden (50, 51) der Laufringe (46, 47) je einen niedrigen und an ihren gegenüberliegenden Seiten je einen hohen Bord (54, 55) aufweisen, während die übrigen Kugellaufrillen (56, 57) beidseitig von hohen Borden (58, 59) begrenzt sind.

8. Verfahren zum Zusammenbau eines Schrägkugellagers nach einem der Ansprüche 1 bis 6, dadurch gekennzeichnet, daß die Kugeln (5, 21, 22, 33, 34) in den anderen als den mit dem unrunden niedrigen Bord versehenen Laufring (1, 2, 14, 17, 18, 36) eingelegt werden, worauf einer der Laufringe (1, 2, 14, 17, 18, 36) durch Druckeinwirkung so weit elastisch unrund verformt wird, bis die Hüllkontur der Kugeln (5, 21, 22, 33) und die der höheren Abschnitte (11, 30) des unrunden niedrigen Bordes (8, 10, 24, 25, 28, 29, 43) einander entsprechen, dann die Laufringe (1, 2, 14, 17, 18, 35, 36) in ihrer Winkellage so zueinander ausgerichtet werden, daß sie axial ineinander einführbar sind, anschließend ineinander eingesetzt werden, worauf die Druckeinwirkung aufgehoben wird.

9. Verfahren zum Zusammenbau eines Schrägkugellagers nach Anspruch 7, dadurch gekennzeichnet, daß in jeden Laufring (46,47) ein Kranz von Kugeln (44, 45) in die Kugellaufrille (56, 57) mit den beidseitig hohen Borden (58, 59) eingelegt wird, worauf einer der Laufringe (46, 47) durch Druckeinwirkung so weit elastisch unrund verformt wird, bis die Hüllkontur der dem unrunden Bord (53) zugewandten Kugeln (44) und die der höheren Abschnitte des niedrigen unrunden Bordes (53) einander entsprechen, dann die Laufringe (46, 47) in ihrer Winkellage so zueinander ausgerichtet werden, daß sie axial ineinander einführbar sind, anschließend ineinander eingesetzt werden, worauf die Druckeinwirkung aufghoben wird.

## Claims

1. Oblique ball bearing, consisting of an inner and an outer race ring (1, 2, 14, 17, 18, 35, 36, 46), of which each has at least one ball race groove (3, 4, 15, 16, 19, 20, 39, 49), in which rolls a set of balls (5, 21, 22, 33, 44), wherein at least one ball race groove (3, 4, 15, 16, 19, 20, 39, 49) of one race ring (1, 2, 14, 17, 18, 35, 36, 46) is delimited on one side by a high rim and on the opposite side by a lower rim, characterised in that on one of the race rings (1, 2, 14, 17, 18, 35, 46), the lower rim (8, 10, 24, 25, 28, 29, 43, 53) has a non-circular contour with a plurality of higher and lower sections (11, 12, 30, 31), wherein the lower sections (12, 31) preferably open steplessly into the deepest part of the ball race groove (3, 4, 15, 16, 19, 20, 39, 49), in that the envelope contour of the higher sections (11, 30) of the rim (8, 10, 24, 25, 28, 29, 43, 53) corresponds to the envelope contour of the balls (5, 21, 22, 33, 44) arranged in the other race ring (1, 2, 14, 17, 18, 36, 47), when one of the race rings (1, 2, 14, 17, 18, 35, 36, 47) is elastically deformed non-circularly by application of pressure, wherein

a) the amount by which the one race ring (1, 2, 14, 17, 18, 36, 47) is deformed non-circularly, at the point of application of pressure corresponds at most to half the radial play of the oblique ball bearing,

b) the amount by which the higher sections (11, 30) of the non-circular rim (8, 10, 24, 25, 28, 29, 43, 53) project beyond the deepest part of the ball race groove (3, 4, 15, 16, 19, 20, 39, 49) is greater than half the radial play of the oblique ball bearing and corresponds at most to the sum of half the radial play of the oblique ball bearing and the amount by which the one race ring (1, 2, 14, 17, 18, 36, 47) is deformed non-circularly at the point of application of the pressure, and

c) at least one higher section (11, 30) of the non-circular rim (8, 10, 24, 25, 28, 29, 43, 53) extends in the peripheral direction over an angle which is greater than the angle included between two adjacent balls (5, 21, 22, 33, 44).

2. Oblique ball bearing according to claim 1, characterised in that the lower rim (8, 24, 25, 43, 53) with the non-circular contour is arranged on the inner race ring (1, 14, 35, 46).

3. Oblique ball bearing according to claim 1, characterised in that the lower rim (10, 28, 29) with the non- circular contour is arranged on the outer race ring (2, 17, 18).

4. Oblique ball bearing according to claim 1, 2 or 3, characterised in that the non-circular contour of the lower rim (8, 10, 28, 29, 43, 53) has approximately the form of an ellipse.

5. Oblique ball bearing according to claim 1, 2, 3 or 4, characterized in that it has two sets of balls (21, 22), wherein the race ring (17, 18) with the lower rim (28, 29) is divided between the sets of balls (21, 22) in a plane running transverse to the axis.

6. Oblique ball bearing according to claim 1 or 4, characterised in that it has two sets of balls (33, 34) for taking radial and one-sided axial forces, which are held in one-piece race rings (35, 36), wherein at least the inner envelope circles of the sets of balls (33, 34) are different and wherein at least one ball race groove (37) of the outer race ring (36) is delimited on both sides by high rims (38), while the ball race grooves (39, 49) of the inner race ring (35) only have high rims (41, 42) on the side exposed to the axial force and the non-circular lower rim (43) is provided on the inner race ring (35).

7. Oblique ball bearing according to claim 1, 2, 3 or 4, characterised in that it has two sets of balls (44, 45) for taking radial and one-sided axial forces, which are held in one-piece race rings (46, 47) on a common pitch circle diameter, wherein the one ball race groove (48) in the outer race ring (47) and the other ball race groove (49) in the inner race ring (46) each have at the outer end (50, 51) of the race rings (46, 47) away from the axial force a lower rim and on their opposite sides a high rim (54, 55), while the other ball race grooves (56, 57) are delimited on both sides by high rims (58, 59).

8. Method for the assembly of an oblique ball bearing according to one of claims 1 to 6, characterised in that the balls (5, 21, 22, 33, 34) are fitted in the race ring (1, 2, 14, 17, 18, 36) other than that with the non-circular lower rim, whereafter one of the race rings (1, 2, 14, 17, 18, 36) is elastically deformed non-circularly by application of pressure until the envelope contour of the balls (5, 21, 22, 33) and that of the higher sections (11, 30) of the non-circular lower rim (8, 10, 24, 25, 28, 29, 43) correspond to one another, then the race rings (1, 2, 14, 17, 18, 35, 36) are so orientated in their angular position that they can be axially inserted into one another, then they are fitted into one another, whereafter the pressure is released.

9. Method for the assembly of an oblique ball bearing according to claim 7, characterised in that a set of balls (44, 45) is fitted in each race ring (46, 47) in the ball race groove (56, 57) with the high rims (58, 59) on both sides, whereafter one of the race rings (46, 47) is elastically deformed non-circularly by application of pressure until the envelope contour of the balls (44) facing the non-circular rim (53) and that of the higher sections of the lower non-circular rim (53) correspond to one another, then the race rings (46, 47) are so positioned relative to each other in their angular position that they can be axially inserted into one another, then they are fitted into each other, whereafter the pressure is released.

**Revendications**

1. Roulement à billes à contact oblique, comprenant respectivement une bague de roulement intérieure et une bague de roulement extérieure (1, 2, 14, 17, 18, 35, 36, 46) dont chacune comprend au moins une gorge de roulement à billes (3, 4, 15, 16, 19, 20, 39, 49), dans laquelle roule une couronne de billes (5, 21, 22, 33, 44) au moins une gorge de roulement à billes (3, 4, 15, 16, 19, 20, 39, 49) d'une bague de roulement (1, 2, 14, 17, 18, 35, 36, 46) étant délimitée de l'un de ses côté par un bord haut et, du côté opposé, par un bord bas, caractérisé en ce que, sur l'une au moins des bagues de roulement (1, 2, 14, 17, 18, 35, 46), le bord bas (8, 10, 24, 25, 28, 29, 43, 53) présente un tel contour à faux-rond comportant une pluralité de sections élevées et abaissées (11, 12, 30, 31), les sections abaissées (12, 31) débouchant de préférence sans discontinuité au point le plus bas de la gorge de roulement à billes (3, 4, 15, 16, 19, 20, 39, 49), de façon que le contour enveloppant des sections élevées (11, 30) du bord (8, 10, 24, 25, 28, 29, 43, 53) corresponde au contour enveloppant des billes (5, 21, 22, 33, 44) placées dans l'autre bague de roulement (1, 2, 14, 17, 18, 36, 47), lorsque l'une des bagues de roulement (1, 2, 14, 17, 18, 36, 47) subit une déformation élastique à faux-rond sous l'effet de la pression,

a) le degré de déformation à faux-rond de l'une des bagues de roulement (1, 2, 14, 17, 18, 36, 47) correspondant au plus, au point d'application de la pression, à la moitié du jeu radial du roulement à billes à contact oblique,

b) le degré dont les sections élevées (11, 30) du bord à faux-rond (8, 10, 24, 25, 28, 29, 43, 53) dépassent du point le plus bas de la gorge de roulement à billes (3, 4, 15, 16, 19, 20, 39, 49) étant supérieur à la moitié du jeu radial du roulement à billes à contact oblique et correspondant au plus, à la somme de la moitié du jeu radial du roulement à billes à contact oblique et du degré de déformation à faux-rond de l'une des bagues de roulement (1, 2, 14, 17, 18, 36, 47) au point d'application de la pression, et

c) au moins une section élevée (11, 30) du bord à faux-rond (8, 10, 24, 25, 28, 29, 43, 53) s'étendant, en direction périphérique, sur un angle supérieur à l'angle compris entre deux billes voisines (5, 21, 22, 33, 44).

2. Roulement à billes à contact oblique suivant la revendication 1, caractérisé en ce que le bord bas (8, 24, 25, 43, 53) comportant le contour à faux-rond est placé sur la bague de roulement intérieure (1, 14, 35, 46).

3. Roulement à billes à contact oblique suivant la revendication 1, caractérisé en ce que le bord bas (10, 28, 29) comportant le contour à faux-rond est placé sur la bague de roulement extérieure (2, 17, 18).

4. Roulement à billes à contact oblique suivant la revendication 1, 2 ou 3, caractérisé en ce que le contour à faux-rond du bord bas (8, 10, 28, 29, 43, 53) a sensiblement la forme d'une ellipse.

5. Roulement à billes à contact oblique suivant la revendication 1, 2, 3 ou 4, caractérisé en ce qu'il comporte deux couronnes de billes (21, 22), la bague de roulement (17, 18) avec les bords bas (28, 29) entre les couronnes de billes (21, 22) étant divisée dans un plan transversal par rapport à l'axe.

6. Roulement à billes à contact oblique suivant la revendication 1 ou 4, caractérisé en ce qu'il comporte deux couronnes de billes (33, 34) pour absorber des forces radiales et des forces axiales unilatérales, qui sont logées dans des bagues de roulement d'une seule pièce (35, 36), au moins les cercles enveloppants intérieurs des couronnes de billes (33, 34) étant différents et au moins une gorge de roulement à billes (37) de la bague de roulement extérieure (36) étant délimitée des deux côtés par des bords hauts (38), tandis que les gorges de roulement à billes (39, 40) de la bague de roulement intérieure (35) ne comportent des bords hauts (41, 42) que sur les côtés exposés à la force axiale et que le bord bas à faux-rond (43) est prévu sur la bague de roulement intérieure (35).

7. Roulement à billes à contact oblique suivant la revendication 1, 2, 3 ou 4, caractérisé en ce qu'il comporte deux couronnes de billes (44, 45) pour absorber des forces radiales et des forces axiales unilatérales, qui sont logées dans des bagues de roulement d'une seule pièce (46, 47) sur un diamètre de cercle primitif commun l'une des gorges de roulement à billes (48) située dans la bague de roulement extérieure (47) et l'autre gorge à billes (49) située dans la bague de roulement intérieure (46) comportant chacune aux extrémités extérieures (50, 51) des bagues de roulement (46, 47) opposées à la force axiale un bord bas et respectivement sur leurs côtés opposés un bord haut (54, 55), tandis que les autres gorges de roulement à billes (56, 57) sont délimitées des deux côtés par des bords hauts (58, 59).

8. Procédé d'assemblage d'un roulement à billes à contact oblique suivant l'une des revendications 1 à 6, caractérisé en ce que l'on insère les billes (5, 21, 22, 33, 34) dans l'autre bague de roulement que celle qui comporte le bord bas à faux-rond (1, 2, 14, 17, 18, 36), puis l'on déforme élastiquement à faux-rond l'une des bagues de roulement (1, 2, 14, 17, 18, 36) sous l'action de la pression jusqu'à ce que le contour enveloppant des billes (5, 21, 22, 23) et celui des sections élevées (11, 30) du bord bas à faux-rond (8, 10, 24, 25, 28, 29, 43) se correspondent, en ce que l'on oriente alors les bagues de roulement (1, 2, 14, 17, 18, 35, 36) mutuellement, en ce qui concerne leur position angulaire, de façon qu'on puisse les introduire axialement l'une dans l'autre, en ce que l'on les introduit ensuite l'une dans l'autre, et en ce que l'on fait alors cesser l'action de la pression.

9. Procédé d'assemblage d'un roulement à billes à contact oblique suivant la revendication 7, caractérisé en ce qu'on insère dans chaque bague de roulement (46, 47) une couronne de billes (44, 45) dans la gorge de roulement à billes (56, 57) comportant les bords hauts (58, 59) des deux côtés, puis l'on déforme élastiquement à faux-rond l'une des bagues de roulement (46, 47) par action de la pression jusqu à ce que le contour enveloppant des billes (44) situées du côté du bord à faux-rond (53) et celui des sections élevées du bord bas à faux-rond (53) se correspondent, en ce que l'on oriente mutuellement les bagues de roulement (46, 47) en ce qui concerne leur position angulaire de façon qu'on puisse les introduire axialement l'une dans l'autre, en ce que l'on les introduit ensuite l'une dans l'autre, et en ce que l'on fait alors cesser l'action de la pression.

0 192 841

# Fig. 1

# Fig. 2

# Fig. 5

# Fig. 3

# Fig. 4

## Fig. 6

## Fig. 7

## Fig. 8

## Fig. 9

**Fig. 10**

**Fig. 11**

**Fig. 12**

**Fig. 13**